# EUROPEAN PATENT APPLICATION

(11) **EP 4 328 872 A1**
(43) Date of publication of application: **28.02.2024**
(21) Application number: 22199876.8
(22) Date of filing: 05.10.2022
(51) Int. Cl.: G06V 20/68

(54) **FOOD TEMPERATURE STATE DETERMINATION**

(30) Priority: 24.08.2022 WO PCT/CN2022/114496
(71) Applicant: Versuni Holding B.V., 5656 AE Eindhoven (NL)
(72) Inventor: TAN, Jingwei, 5656 AE Eindhoven (NL)
(74) Representative: Vollering, Stefanus Franciscus Maria

(57) **Abstract**

In an embodiment, a cooking method (100) is described. The cooking method comprise receiving (102) image data corresponding to a view of food in a pre-cooked state. A region of the image data maps to at least part of the food visible in the view. The region of the image data comprises a set of image parameter values representative of an appearance of the food in its pre-cooked state. The set of image parameter values has a range of image parameter values. The cooking method further comprises generating (104) a dataset indicative of a proportion of the set of image parameter values that fall within each interval of a set of intervals comprising the range of image parameter values. The cooking method further comprises identifying (106) data from the dataset that is indicative of a temperature state of the food in its pre-cooked state. The cooking method further comprises determining (108) the temperature state of the food in its pre-cooked state by determining whether the identified data is indicative of the temperature state being one of a set of temperature states. The cooking method further comprises determining (110) a cooking parameter to use for cooking the food. The cooking parameter is determined in dependence on the temperature state of the food in its pre-cooked state.

## Description

### TECHNICAL FIELD OF THE INVENTION

The invention relates to a cooking method, a non-transitory machine-readable medium and a cooking apparatus for determining a temperature state of food.

### BACKGROUND OF THE INVENTION

Camera-integrated cooking apparatus such as an oven or air fryer may have intelligent functions installed to provide a better and more convenient cooking control functions, which may improve consumers experience. Machine vision techniques (i.e., based on artificial intelligence) may be deployed to monitor and handle the cooking process (e.g., by controlling the temperature and/or cooking time). Machine vision techniques may rely on complex models and require extensive training. A cloud computing system may be used to perform processing of the image data acquired by the camera in order to facilitate the cooking control function. Alternatively, the processing may be carried on-board the cooking apparatus, which may require enhanced compute resources such as processing power and/or memory.

Food recognition is one function that may be provided by a camera-integrated cooking apparatus. When food is put into the cooking apparatus, machine vision may predict the food type, which may be useful for the cooking process.

### SUMMARY OF THE INVENTION

Food initial state such as whether the food is frozen or not may be very relevant information besides food type because it will likely affect the cooking strategy. Some cooking apparatus may have many cooking programs to account for different food types and food initial state. A consumer may find it difficult to handle a large number of cooking programs and/or may not benefit from this functionality. Instead, the consumer may need to spend additional time working out what cooking settings are needed for the food type and food initial state.

Certain aspects or embodiments described herein relate to identifying a temperature state of food. Certain aspects or embodiments may reduce or obviate certain problems associated with using cooking apparatus to cook food with different food initial state.

In a first aspect, a cooking method is described. The cooking method comprises receiving image data corresponding to a view of food in a pre-cooked state. A region of the image data maps to at least part of the food visible in the view. The region of the image data comprises a set of image parameter values representative of an appearance of the food in its pre-cooked state. The set of image parameter values has a range of image parameter values. The cooking method further comprises generating a dataset indicative of a proportion of the set of image parameter values that fall within each interval of a set of intervals comprising the range of image parameter values. The cooking method further comprises identifying data from the dataset that is indicative of a temperature state of the food in its pre-cooked state. The cooking method further comprises determining the temperature state of the food in its pre-cooked state by determining whether the identified data is indicative of the temperature state being one of a set of temperature states. The cooking method further comprises determining a cooking parameter to use for cooking the food. The cooking parameter is determined in dependence on the temperature state of the food in its pre-cooked state.

Some embodiments relating to the first and other aspects are now described.

In some embodiments, determining the temperature state of the food comprises using a non-machine learning based method to determine the temperature state.

In some embodiments, the set of temperature states comprise frozen and non-frozen.

In some embodiments, a first temperature state of the set of temperature states has an associated first range of data values. A second temperature state of the set of temperature states has an associated second range of data values. Determining whether the identified data is indicative of the temperature state being one of the set of temperature states comprises: in response to determining that a data value derived from the identified data falls within the first range, determining that the food is in the first temperature state; and in response to determining that a data value derived from the identified data falls within the second range, determining that the food is in the second temperature state.

In some embodiments, the data value is derived based on an average image parameter value calculated from the dataset.

In some embodiments, the average image parameter value comprises a mean image parameter value. The mean image parameter value may correspond to a sum of the image parameter values within the set divided by a total number of image parameter values in the set.

In some embodiments, the average image parameter value comprises a median image parameter value. The median image parameter value may correspond to a middle image parameter value within an ordered set of the image parameter values.

In some embodiments, the average image parameter value comprises a modal image parameter value. The modal image parameter value may correspond to a most common image parameter value within the set.

In some embodiments, the data value is derived from a number of the image parameter values that belong to the interval that comprises the average image parameter value.

In some embodiments, the data value is based on a ratio of the number to a total number of image parameter values in the set of image parameter values. The first range and/or the second range may comprise a predetermined threshold. Determining whether the identified data is indicative of the temperature state being one of the set of temperature states may comprise comparing the ratio with the predetermined threshold. If the ratio has a value on one side of the predetermined threshold, the food has one of the temperature states. If the ratio has a value on the other side of the predetermined threshold, the food has the other temperature state.

In some embodiments, the data value is based on the average image parameter value calculated from the dataset. The first range and/or the second range may comprise a predetermined threshold. Determining whether the identified data is indicative of the temperature state being one of the set of temperature states may comprise comparing the average image parameter value with the predetermined threshold. If the average image parameter value has a value on one side of the predetermined threshold, the food has one of the temperature states. If the average image parameter value has a value on the other side of the predetermined threshold, the food has the other temperature state.

In some embodiments, the dataset is representative of a histogram of the set of image parameter values. The set of intervals may correspond to a set of bins of the histogram.

In some embodiments, the region of the image has an associated set of pixels. The set of image parameter values may be associated with the set of pixels. The proportion in each interval may correspond to a number of the pixels.

In some embodiments, a parameter associated with the image parameter values is a channel of a color space.

In some embodiments, the color space comprises at least one channel. The at least one channel may comprise color, saturation and/or brightness.

In a second aspect, a non-transitory machine readable medium is described. The non-transitory machine readable medium stores instructions readable and executable by a processor to implement the cooking method of any one of the first aspect or related embodiments.

In a third aspect, a cooking apparatus for implementing a cooking process is described. The cooking apparatus comprises a cooking chamber for receiving food. The cooking apparatus further comprises a housing defining the cooking chamber. The cooking apparatus further comprises an air circulation system for circulating air flow inside the cooking chamber. The cooking apparatus further comprises a camera for capturing images during the cooking process. The cooking apparatus comprises a controller. The controller is configured to implement the cooking method of any one of the first aspect or related embodiments.

Certain aspects or embodiments described herein may provide various technical benefits such as reducing the need for too many cooking programs for each food type and initial temperature state, reducing complexity and/or increasing convenience for the consumer, and/or increasing the accuracy of selecting cooking parameters for cooking food without adding to the burden of the consumer.

These and other aspects of the invention will be apparent from and elucidated with reference to the embodiment(s) described hereinafter.

### BRIEF DESCRIPTION OF DRAWINGS

Exemplary embodiments of the invention will now be described, by way of example only, with reference to the following drawings, in which:
FIG. 1 refers to a cooking method according to an embodiment;
FIG. 2 is a schematic drawing of a cooking ecosystem according to an embodiment;
FIG. 3 is a schematic drawing of a cooking apparatus for implementing a cooking process according to an embodiment;
FIG. 4 is a schematic drawing of a view of food used in various embodiments;
FIG. 5 is a flowchart of a cooking method according to an embodiment;
FIGS. 6(A)-(B) show two histograms of image parameter values obtained from an image of chicken breast that is fresh or frozen, respectively;
FIGS. 7(A)-(B) show two histograms of image parameter values obtained from an image of French fries that are fresh or frozen, respectively;
FIGS. 8(A)-(B) show two histograms of image parameter values obtained from an image of red meat that is fresh or frozen, respectively;
FIG. 9 is a schematic drawing of a machine-readable medium for implementing various embodiments; and
FIG. 10 is a schematic drawing of apparatus for implementing various embodiments.

### DETAILED DESCRIPTION OF THE EMBODIMENTS

As referred to herein, a "cooking process" refers to applying heat to food to cause a change in the food. Such application of heat may result in a mere warming of the food, or a more substantial change in the food such as may be achieved by using cooking methods such as roasting, grilling, frying, air frying, etc. At the start of the cooking process, food may be considered to be in a "pre-cooked state" since no chemical or physical changes have occurred as a result of the cooking process. This may apply prior to food being placed in a cooking apparatus or even shortly after food is placed in a cooking apparatus. The pre-cooked state may refer to a temperature state such as room temperature (e.g., a comfortable ambient temperature such as around 20°C), chilled (e.g., by a refrigerator to a temperature such as between 0 to 5°C) or frozen (e.g., by a freezer to a temperature such as below 0°C such as between -24 to -16°C).

As referred to herein, a "cooking apparatus" refers to any device capable of applying heat to food, in order to complete the cooking process as referred to above. Heat may be applied to the food by the cooking apparatus in one or multiple ways such as by conduction, convection or radiation. Examples of cooking apparatus include: an oven, microwave oven, hob, air fryer, etc.

There are several ways to automatically recognize frozen food and non-frozen food (or at least distinguish between such food).

One example is to use a temperature sensor, like a temperature probe, to measure the temperature. Using a temperature probe increases the burden on the user because it requires the user to insert the probe into food or touch the surface of the food if the probe cannot be inserted into food since some frozen food is too hard. Using a temperature probe may not be convenient and adds to the cost of the solution.

Another example is to use an infra-red temperature sensor. However, this adds to the cost.

Certain embodiments recognize that image data provided by a camera associated with a cooking apparatus may include information from which the food initial state can be determined. Certain embodiments described herein may identify a temperature state of food. Certain embodiments may reduce or obviate certain problems associated with using cooking apparatus to cook food with different food initial state.

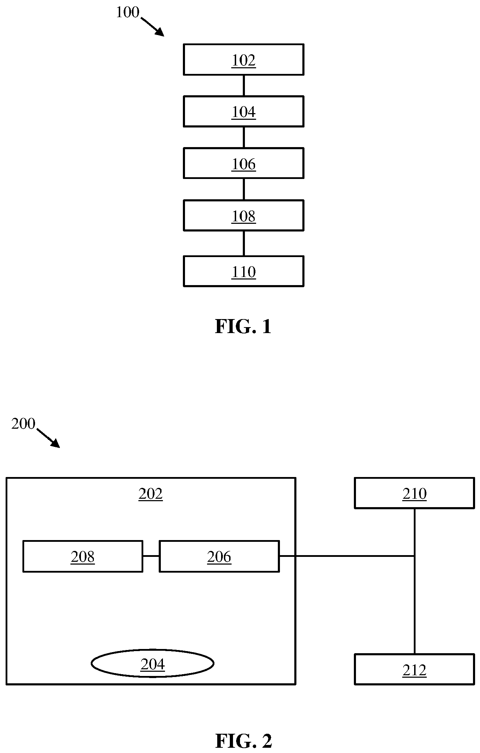

FIG. 1 refers to a cooking method 100 according to an embodiment. The cooking method 100 may be computer-implemented e.g., by a processor of a cooking apparatus or another entity, as described in more detail below. Image data may be obtained by a camera (as described in more detail below) prior to, at the start of or during the cooking process (as long as the food is in a pre-cooked state).

The cooking method 100 comprises, at block 102, receiving image data corresponding to a view of food in a pre-cooked state.

A region of the image data maps to at least part of the food visible in the view.

For example, certain pixels of the image data may register pixel intensity values (i.e., image parameter values) corresponding to the appearance of the food visible in the view. In some cases, the region of the image data may refer to a set of pixels that map to the part of the food visible in the view. Thus, pixel intensity information recorded by such pixels may correspond to the appearance of the food at the time of acquiring the image.

The region of the image data comprises a set of image parameter values representative of an appearance of the food in its pre-cooked state.

As referred to above, the region of the image data may correspond to a set of pixels. For example, each pixel may be associated with an image parameter value such as an intensity value or some other measure of color and/or intensity registered by or associated with the pixel. In some cases, the image data may be raw imaging data such as in the red-green-blue (RGB) data format (i.e., pixel intensity values for each respective color) acquired directly by the camera. In some cases, the image data may be processed image data such as in a different color space such as the hue-saturation-value (HSV) color space (e.g., via a conversion from the original data format of the acquired imaging data). In some such color spaces, the region of the image data may be represented by a hue, saturation and value for the set of pixels in the region.

The set of image parameter values has a range of image parameter values.

Whichever image parameter value is used, there may be a range of such values. For example, there may be a distribution of different colors (e.g., RGB values or hue, saturation, value, etc.) within the part of the image data. By way of example, red meat may have a higher proportion of red colors/hue than other types of meat. Some types of food may have a greater range of colors than other types of foods, which means that the distribution of color (or another image parameter value) may vary in terms of range of image parameter values according to the type of food.

Thus, an image parameter may refer to a brightness, intensity, color, etc. The image parameter value may refer to a corresponding value under a certain color space such as RGB, HSV, etc. By way of example, hue may be in the numerical range 0 to 359° (or a different scale) where 0° refers to red, 60° refers to yellow, 120° refers to green, etc. The range of image parameter values of the set of image parameters (as indicated by the region of the image data) may be a subrange of this range. Thus, an image of red meat might have pixels with hue values in a subrange centered around 0°. The hue/color registered by the pixels may vary according to the illumination arrangement and/or the spectral reflectance of the food. By way of further example, saturation may be in the numerical range 0 to 255. The saturation registered by the pixels may vary according to the illumination arrangement and/or reflectance of the food.

The cooking method 100 further comprises, at block 104, generating a dataset indicative of a proportion of the set of image parameter values that fall within each interval of a set of intervals comprising the range of image parameter values.

As mentioned previously, there may be a range of image parameter values depending on the food type, illumination arrangement, etc. Other factors such as camera type may influence the range of image parameter values. It is possible to divide the range of possible image parameter values into intervals (or "bins" using histogram terminology). The proportion (e.g., number of pixels, sub-region/area of the region, etc.) of the set of image parameter values that fall within each interval may be indicative of the distribution of the image parameter values. For example, if the region of the image data corresponds to red meat, it can be expected that the majority of the set of image parameter values will have a hue close to 0° without many other image parameter values having a hue elsewhere in the spectrum. The size of the interval affects the distribution. For example, if each interval is one degree (1°), the distribution of image parameter values will be different to the case where each interval is five degrees (5°). The selection of the size of the interval may be predetermined, for example, based on experimental data indicating an optimum interval to use. In some cases, the dataset may comprise a table or database indicative of the proportion such as a number of pixels corresponding to each entry (interval) in the table. In some cases, the dataset could be used to generate a histogram.

The cooking method 100 further comprises, at block 106, identifying data from the dataset that is indicative of a temperature state of the food in its pre-cooked state.

For example, some or all of the data from the dataset may be indicative of the temperature state. In some examples, the data from the dataset may be information identifying the number of pixels in the region of the image data that register an image parameter value falling within each interval. For example, the data may comprise the number of pixels (for each interval) in the region of the image data that have an image parameter value falling within each interval.

Since image parameter values such as color, intensity, etc., may be indicative of the pre-cooked state, the data associated with such image parameter values may also be indicative of the pre-cooked state. By way of example, food may have a different appearance depending on whether it is chilled or frozen. For example, ice crystals on the surface of the food may decrease saturation due to the scattering incident light. In another example, chilled food may have a glossy appearance, which may increase saturation. In another example, frozen red meat may have a pink hue while fresh read meat may have a red hue.

The cooking method 100 further comprises, at block 108, determining the temperature state of the food in its pre-cooked state by determining whether the identified data is indicative of the temperature state being one of a set of temperature states.

As indicated above, the visual appearance of food may be indicative of certain physical properties of the food, which may depend on whether the food is in a pre-cooked state or not. For example, temperature may have an effect on the visual appearance, which may be detected via the image parameter values associated with the region.

The cooking method 100 further comprises, at block 110, determining a cooking parameter to use for cooking the food. The cooking parameter (e.g., cooking temperature, cooking time, etc.) is determined in dependence on the temperature state of the food in its pre-cooked state.

Automatically determining the temperature state of the food in its pre-cooked state may be useful for consumers since they may not need to be burdened with making adjustments to the cooking parameter to account for the variation in the cooking process resulting from the food being in any of the set of temperature states. For example, the cooking method 100 may automatically modify the cooking process by selecting at least one cooking parameter (e.g., the cooking temperature, cooking time, etc.) for a cooking apparatus to use according to the temperature state without burdening the consumer. For example, in the case of determining that the food temperature state is "frozen", the cooking method 100 may determine an appropriate cooking parameter to use such as a higher cooking temperature and/or longer cooking time than would otherwise be used if the food temperature state is determined to be "fresh".

Thus, method 100 and certain other embodiments described herein may provide various technical benefits. For example, some embodiments may reduce the need for too many cooking programs for each food type and initial temperature state. Some embodiments may reduce complexity and/or increase convenience for the consumer. Some embodiments may increase the accuracy of selecting cooking parameters for cooking food without adding to the burden of the consumer.

FIG.2 is a schematic drawing of a cooking ecosystem 200 according to an embodiment. Certain embodiments described herein (e.g., cooking method 100) may be implemented in certain parts of the cooking ecosystem 200. The cooking ecosystem 200 depicts various devices and entities which may be deployed as part of the cooking ecosystem 200. Not every device or entity depicted may be needed in some scenarios, as explained below.

The cooking ecosystem 200 comprises a cooking apparatus 202 for cooking food 204. The cooking apparatus 202 comprises a controller 206 for controlling the cooking process. For example, the controller 206 may control a heating element (not shown) of the cooking apparatus 202 (e.g., to control the cooking temperature of the cooking apparatus 202). The controller 206 is communicatively coupled to a camera 208 for capturing images. The camera 208 is positioned such that a region of interest associated with the food 204 is within a field of view of the camera 208. This particular configuration is an example. For example, the camera 208 may or may not be inside the cooking apparatus 202 but may still have the food 204 within its field of view, even if the camera 208 is external to the cooking apparatus 202.

In some cases, the cooking ecosystem 200 comprises a cloud computing service 210 communicatively coupled to the controller 206. A cloud computing service 210 may provide data storage and/or data processing services. The cloud computing service 210 may provide computing resource where there is insufficient computing resource available in any connected devices. In some cases, the cloud computing service 210 may provide updates and other services for the cooking apparatus 202.

In some cases, the cooking ecosystem 200 comprises a user equipment 212 communicatively coupled to the controller 206. A user equipment 212 may refer to any computing device associated with a user (e.g., of the cooking apparatus 202). Examples of user equipment 212 include: a smartphone, smartwatch, tablet, Internet of Things (IoT) device, etc. In some cases, the user equipment 212 may be communicatively coupled to the cloud computing service 210.

Any one or combination of the controller 206, cloud computing service 210 and the user equipment 212 may be used to implement the cooking method 100 and other embodiments described herein. For example, in some cases, the controller 206 may implement the cooking method 100 and related embodiments. In this regard, the controller 206 may comprise a processor (not shown) for implementing the cooking method 100 and related embodiments. In other cases, processing circuitry associated with the various devices and entities of the cooking ecosystem 200 may implement the cooking method 100 and related embodiments.

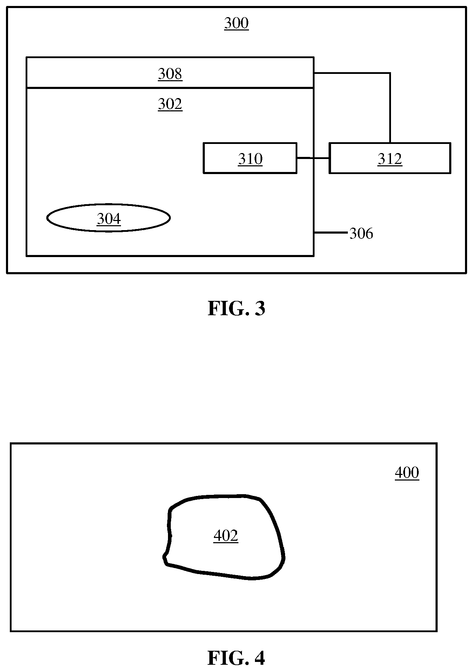

FIG.3 is a schematic drawing of a cooking apparatus 300 for implementing a cooking process according to an embodiment. The cooking apparatus 300 may implement the functionality of certain embodiments described herein such as described in relation to the cooking method 100 of FIG.1. Certain features of the cooking apparatus 300 may correspond to or have similar functionality to features of the cooking apparatus 202 of FIG.2.

The cooking apparatus 300 comprises a cooking chamber 302 for receiving food 304. The cooking apparatus 300 further comprises a housing 306 defining the cooking chamber 302. The cooking apparatus 300 further comprises an air circulation system 308 for circulating air flow inside the cooking chamber 302. Therefore, in this regard, the cooking apparatus 300 may have a similar form to a fan oven or an air fryer. The cooking apparatus 300 further comprises a camera 310 for capturing images (of the "view" associated with the food 304) during the cooking process. The captured images may correspond to or be used to derive the first and second image data.

The cooking apparatus 300 further comprises a controller 312 such as corresponding to the controller 206 of FIG.2. In this embodiment, the controller 312 is configured to implement the cooking method 100.

Thus, the controller 312 is configured to receive image data corresponding to a view of food 304 in a pre-cooked state. A region of the image data maps to at least part of the food 304 visible in the view. The region of the image data comprises a set of image parameter values representative of an appearance of the food 304 in its pre-cooked state. The set of image parameter values has a range of image parameter values.

The controller 312 is further configured to generate a dataset indicative of a proportion of the set of image parameter values that fall within each interval of a set of intervals comprising the range of image parameter values.

The controller 312 is further configured to identify data from the dataset that is indicative of a temperature state of the food 304 in its pre-cooked state.

The controller 312 is further configured to determine the temperature state of the food 304 in its pre-cooked state by determining whether the identified data is indicative of the temperature state being one of a set of temperature states.

The controller 312 is further configured to determine a cooking parameter for the cooking apparatus 300 to use for cooking the food 304. The cooking parameter is determined in dependence on the temperature state of the food 304 in its pre-cooked state.

Although FIG.3 describes that the controller 312 of the cooking apparatus 300 implements the cooking method 100, in some cases, other devices or entities (such as depicted by FIG.2) may implement at least some of the functionality of the cooking method 100 (and related embodiments).

In an alternative arrangement, the image data may be acquired by a camera while the food 304 is external to the cooking apparatus 300 (e.g., acquired by a different camera (not shown) to camera 310). Since embodiments refer to determining the pre-cooked state, it is not necessary for the food 304 to be in the cooking apparatus 300 while the image data is acquired. Thus, the image data could represent a view of the food 304 in any location.

FIG. 4 is a schematic drawing of a view 400 corresponding to image data of food 402 used in various embodiments. As can be seen in the view 400, the food 402 is only present in part of the view 400. Thus, in some embodiments, the food 402 may be segmented and the image parameter values acquired from the segmented part of the image data. In some cases, the imaging data may be pre-processed prior to segmentation. For example, preprocessing may comprise converting raw image data (such as in the RGB format) to another image data format such as based on the HSV color space. Such image parameter values belong to the (segmented) region that maps to at least part of the food visible in the view.

A description of further embodiments is now provided with reference to the above description.

This disclosure proposes a method to automatically identify the initial state of food (e.g., its temperature state such as frozen or not frozen). This may be useful when pre-cooked food is placed in a cooking apparatus incorporating a camera capable of providing the image data used in the methods described herein.

In some embodiments, the method may automatically select different identification methods for at least two categories of food. For example, a different identification method may be used for red meat and non-red meat food. Hue and saturation features of the food may be captured via the image data and used for identifying the initial state. In some cases, the image parameter values extracted from the region may be represented by a histogram in the hue-saturation-value (HSV) color space corresponding to the food. Statistical data may be extracted from the histogram and used to compare with a predetermined threshold for that food to identify whether the food is frozen or fresh (or another temperature state). In some cases, hue may be used for the identification. In some cases, saturation may be used for the identification.

For food like plant food (e.g., French-fries, edamame), white meat (e.g., chicken breast, chicken drumstick, etc.) the hue of its frozen and fresh status is quite similar. However, there may be a detectable difference in terms of saturation for such food. The surface of frozen food is normally quite coarse, which is caused by the freezing process. The freezing process may make the surface shrink or accumulate many ice drops. In contrast, fresh food may be smooth and/or glossy. Therefore, in the case of the HSV color space (or another appropriate color space), it is possible to use the image parameter values based on the saturation channel to generate a histogram and identify features in the histogram to identify the initial state of the food.

For food like red meat (e.g., beef, pork), once it is frozen, its hue may change. Red meat food is very rich of myoglobin, which is a red-pigment. The freezing process may break some of the cells. This may be because some tiny holes are formed during the freezing process, which increases the contact chance of oxygen and myoglobin to change the hue. Therefore, it is possible to use hue to tell if food is frozen or not.

An implementation that makes use of the above knowledge about how the image parameter values change depending on food type and initial state is now described.

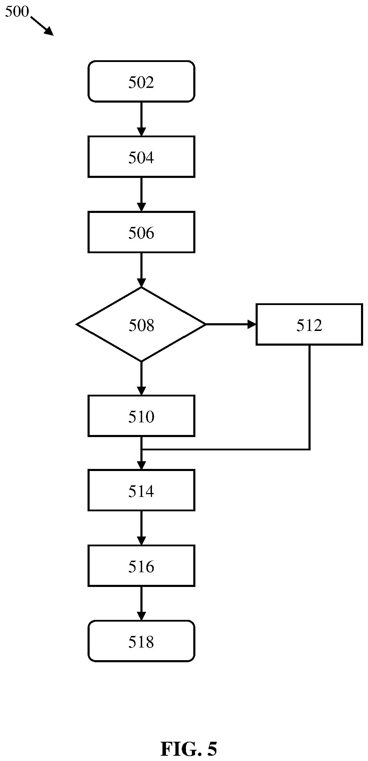

FIG. 5 is a flowchart of a cooking method 500 according to an embodiment. The cooking method 500 may be implemented in the same way as the cooking method 100 described above. The blocks of cooking method 500 are described below. Certain blocks may be omitted or performed in a different order to that shown.

The method 500 starts at block 502.

The method 500 proceeds to block 504 where an image (or set of images or a video) of the food is acquired. In some cases, the food type and/or quantity of the food may be indicated. The food type and/or quantity may affect how the initial state is determined. Sometimes the quantity of food may influence the distribution of the image parameter values. The food type and/or quantity determination may be realized by automatic recognition (e.g., via analysis of the color of the food, weighing the food, etc.) or by consumer manual input, etc.

The method 500 proceeds to block 506 where the image may be processed in order to implement the rest of the method 500. For example, the image(s) may be converted into a suitable image data format (such as based on the HSV color space) and/or segmented to implement the rest of the method 500.

In some cases, the segmentation may comprise selecting a region of interest from the image, where the region of interest comprises pixels which map to the region of the food item. The area of the region of interest may be larger than the area of the food visible in the view. In some cases, selecting the region of interest may be performed by identifying pixels in the image data corresponding to the extremities of the food such as top, bottom, left and right of the food and generating a rectangular region of interest intersecting each of these positions. Selecting the region of interest may improve later processing efficiency.

In some cases, the segmentation further comprises segmenting the food from the region of interest. In some cases, the segmentation may be performed without first selecting the region of interest. In some cases, segmenting may be performed by identifying abrupt pixel value changes (e.g., above a threshold value) at a boundary between the food and its surroundings visible in the view. The pixels where there is an abrupt change may correspond to the perimeter of the food and the pixels within the perimeter may correspond to the region of the food. In some cases, the segmenting may be performed by a machine learning model trained to segment food from surroundings.

In some cases, the segmentation may provide the data needed to calculate the area of the food (e.g., the number of pixels) in the region of interest/segmented region.

In some cases, the image data corresponding to the region of interest/segmented region may be converted into a different color space such as the HSV color space. In some cases, the entire image data may be converted into the different color space prior to segmenting.

The method 500 proceeds to block 508 where the food type is ascertained (e.g., the food type may have been identified in a previous block) to determine how the food initial state is to be determined. In this case, if the food type is not red meat (e.g., it is plant-type food), the method 500 proceeds to block 510. If the food type is red meat, the method 500 proceeds to block 512.

At blocks 508 and 510, statistical information may be extracted from the image parameter values for the region of the image data corresponding to the food. The type of statistical information to be extracted may depend on which block 508, 510 is selected.

In some cases, the type of statistical information is a histogram of the number of pixels per bin (e.g., interval) of the hue and/or saturation channels that have a gray-level pixel value falling within each bin.

In some cases, the type of statistical information is a mean value of the hue channel or saturation channel of the region of the image data corresponding to the food.

In some cases, the type of statistical information is derived from the histogram. For example, the information could be maximum frequency of occurrence of a certain channel such as the modal saturation channel pixel value (which may be referred to herein as MaxVal_s). In other words, the interval with the highest number of pixels of all the pixels with an image parameter value falling within the interval may be regarded as the modal saturation channel pixel value. In other words, MaxVal_s may correspond to the number of pixels (or another indicator of the proportion of the set of image parameter values) in the interval that have an image parameter value within a particular interval.

At block 510, a data value is derived from the statistical information. As explained in more detail below, in the case of plant-based food or non-red meat, the data value may be based on a ratio between the total area of the food visible in the view (e.g., the total number of pixels corresponding to the segmented region) and MaxVal_s. The method 500 then proceeds to block 514.

At block 514, the data value is compared with a predetermined threshold to determine the pre-cooked state of the food. The predetermined threshold may depend on the food type, quantity of food, etc. In some cases, the predetermined threshold may be established from experimentation.

At block 516, a cooking process may be selected based on the pre-cooked state. For example, if the food is frozen, the cooking temperature and/or the cooking time may be increased compared with if the food is fresh.

At block 512, a data value is derived from the statistical information. As explained in more detail below, in the case of red meat, the data value may be based on a mean value of the hue channel. The method 500 then proceeds to block 514 and block 516.

The method 500 ends at block 518.

Some details of experimental results obtained as a result of implementing the cooking method 500 are described below.

The first experiment refers to chicken breast initial state identification. As part of the first experiment, the chicken is put into a cooking apparatus and image data is acquired. It is determined from the image data that the food type is chicken breast so it is not red meat. The region of interest is selected and the food region is segmented. The segmented food region is converted to the HSV color space. The HSV color space represents the appearance of the food via the three channels (i.e., hue via the H-channel, saturation via the S-channel, value via the V-channel). In this case, image parameter values for the S-channel are selected because saturation is the appropriate channel to use for the food type.

A histogram of the image parameter values (saturation values) is generated.

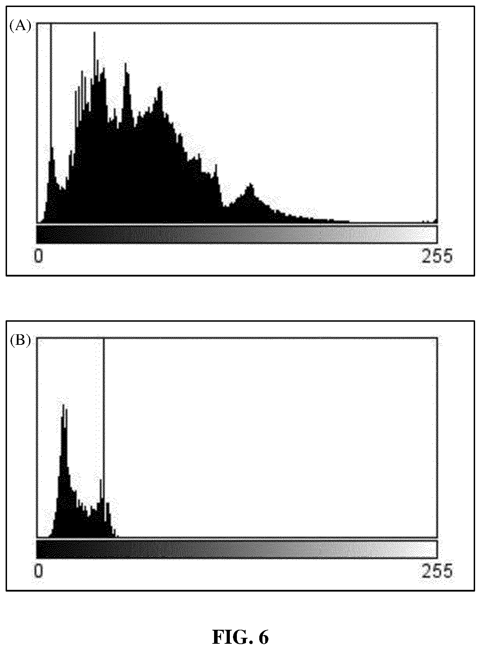

FIGS. 6(A)-(B) show two histograms of image parameter values (the S-channel) obtained from an image of chicken breast that is fresh or frozen, respectively.

For Sample 1 (i.e., fresh), the maximum frequency of occurrence of a given image parameter value is at the image parameter value, Max_Loc = 8 (i.e., the modal value) and its frequency (number of pixels with this image parameter value) is MaxVal_s = 2986. Other statistical information can be extracted from the histogram such as the total number of pixels in the area (176734), mean channel value (66), standard deviation (38), minimum channel value (0) and maximum channel value (255).

For Sample 2 (i.e., frozen), the maximum frequency of occurrence of a given image parameter value is Max_Loc = 42 and its frequency (number of pixels with this image parameter value) is at the image parameter value, MaxVal_s = 30401. Other statistical information can be extracted from the histogram such as the total number of pixels in the area (169207), mean channel value (28), standard deviation (15), minimum channel value (0) and maximum channel value (253).

The data value is calculated from the statistical information. In this case, the data value is an inverse ratio, ratio⁻¹, calculated as ratio⁻¹ = Area/MaxVal_s (the total number of pixels in the area divided by MaxVal_s). MaxVal_s is an example of a (type of) average image parameter value.

**Table 1 below sets out the resulting data value for Samples 1 and 2, clearly indicating a significant difference between fresh and frozen:**

| Food | Area | MaxVal_s | Ratio⁻¹ |
|---|---|---|---|
| Sample 1 | 176734 | 2986 | 59.19 |
| Sample 2 | 169207 | 30401 | 5.57 |

The inverse ratio, ratio⁻¹, is compared with a threshold (in this case, 35). If ratio⁻¹, is > 35 then it is fresh; else it is frozen.

The threshold may be calculated from experiments. In the present case, data for 20 samples of chicken breast (half of which were frozen, and the other half fresh) was collected. The inverse ratio, ratio⁻¹, was calculated for each sample. The mean inverse ratio, ratio⁻¹, was calculated for each temperature state (frozen and fresh) and the threshold was selected as the mid-way point between the two mean values.

The second experiment refers to French fries initial state identification. As part of the second experiment, the French fries are placed into a cooking apparatus and image data is acquired. It is determined from the image data that the food type is French fries so it is not red meat. The region of interest is selected and the food region is segmented. The segmented food region is converted to the HSV color space. The HSV color space represents the appearance of the food via the three channels (i.e., hue via the H-channel, saturation via the S-channel, value via the V-channel). In this case, image parameter values for the S-channel are selected because saturation is the appropriate channel to use for the food type.

A histogram of the image parameter values (saturation values) is generated.

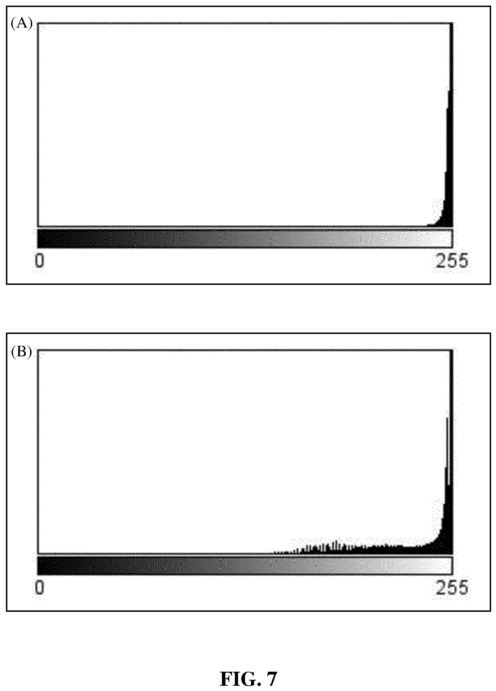

FIGS. 7(A)-(B) show two histograms of image parameter values obtained from an image of French fries that are fresh or frozen, respectively.

For Sample 1 (i.e., fresh), the maximum frequency of occurrence of a given image parameter value is at the image parameter value, Max_Loc = 255 and its frequency (number of pixels with this image parameter value) is MaxVal_s = 155408. Other statistical information can be extracted from the histogram such as the total number of pixels in the area (234491), mean channel value (253), standard deviation (6), minimum channel value (119) and maximum channel value (255).

For Sample 2 (i.e., frozen), the maximum frequency of occurrence of a given image parameter value is at the image parameter value, Max_Loc = 255 and its frequency (number of pixels with this image parameter value) is MaxVal_s = 67233. Other statistical information can be extracted from the histogram such as the total number of pixels in the area (250436), mean channel value (230), standard deviation (32), minimum channel value (77) and maximum channel value (255).

The data value is calculated from the statistical information. In this case, the data value is a ratio calculated as ratio = MaxVal_s/Area (MaxVal_s divided by the total number of pixels in the area). MaxVal_s is an example of a (type of) average image parameter value.

**Table 2 below sets out the resulting data value for Samples 1 and 2, clearly indicating a significant difference between fresh and frozen:**

| Food | *Area* | *MaxVal_s* | *ratio* |
|---|---|---|---|
| Sample 1 | 234491 | 155408 | 66.3% |
| Sample 2 | 250436 | 67233 | 26.8% |

The ratio is compared with a threshold (in this case, a variable ratio depending on weight as discussed in more detail below) to determine the initial state.

**Table 3 below sets out the different thresholds (determined by experimentation similar to the first experiment) depending on the weight of the French fries:**

| Weight range | Threshold for *ratio* | Rule |
|---|---|---|
| Low (<500g) | 40% | If 1/ratio>Threshold: fresh-cut; else frozen; |
| Middle (500g ~ 1100g) | 50% | |
| High (1100g ~1600g) | 60% | |

Different weights of food affect the appearance of the food, and hence the observed image parameter values. Without wishing to be bound by theory, it is assumed that the distance between the food and the camera may affect the mapping between the pixels and the food. If the food is close to the camera, the food appears larger (and each pixel captures a smaller proportion of the overall area) than if the food is further from the camera (and each pixel captures a larger proportion of the overall area). Weight correlates to height due to how many French fries fill the cooking chamber. Based on knowledge of the weight, it was possible to determine the initial status for the samples as indicated by Table 4 below:

| Food | *Weight* | *Threshold* | *ratio⁻¹* | *Identification result* |
|---|---|---|---|---|
| Sample 1 | Middle (500g ~ 1100g) | 50% | 66.3% | Fresh-cut |
| Sample 2 | Middle (500g ~ 1100g) | 50% | 26.8% | Frozen |

The third experiment refers to steak (red meat) initial state identification. As part of the third experiment, the steak is put into a cooking apparatus and image data is acquired. It is determined from the image data that the food type is red meat. The region of interest is selected and the food region is segmented. The segmented food region is converted to the HSV color space. The HSV color space represents the appearance of the food via the three channels (i.e., hue via the H-channel, saturation via the S-channel, value via the V-channel). In this case, image parameter values for the H-channel are selected because hue is the appropriate channel to use for the food type.

A histogram of the image parameter values (hue values) is generated.

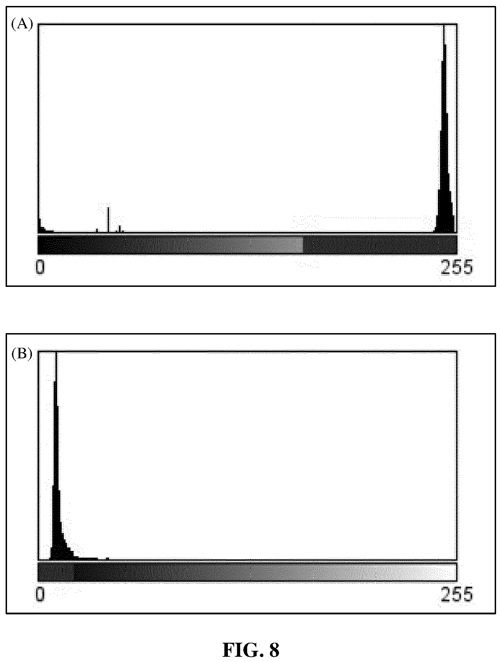

FIGS. 8(A)-(B) show two histograms of image parameter values obtained from an image of red meat that is fresh or frozen, respectively.

For Sample 1 (i.e., fresh), the maximum frequency of occurrence of a given image parameter value is at the image parameter value, Max_Loc = 248 and its frequency (number of pixels with this image parameter value) is MaxVal_s = 27738. Other statistical information can be extracted from the histogram such as the total number of pixels in the area (148298), mean channel value (227), standard deviation (66), minimum channel value (0) and maximum channel value (254).

For Sample 2 (i.e., frozen), the maximum frequency of occurrence of a given image parameter value is at the image parameter value, Max_Loc = 10 and its frequency (number of pixels with this image parameter value) is MaxVal_s = 35705. Other statistical information can be extracted from the histogram such as the total number of pixels in the area (153849), mean channel value (12), standard deviation (5), minimum channel value (0) and maximum channel value (52).

The data value is calculated from the statistical information. In this case, the ratio is calculated as the mean hue. The mean hue is an example of a (type of) average image parameter value.

**Table 5 below sets out the resulting data value (mean hue) for Samples 1 and 2, clearly indicating a significant difference between fresh and frozen:**

| Food | *Mean_h* (Food Mean gray-level pixel density in H-Channel) |
|---|---|
| Sample 1 | 227.031 |
| Sample 2 | 11.927 |

Some embodiments relating to the above are described below.

In some embodiments, determining the temperature state of the food comprises using a non-machine learning based method to determine the temperature state. Using a non-machine learning method may be relatively lightweight such that the determination can be performed without needing to use expensive compute resources.

In some embodiments, the set of temperature states comprise frozen and non-frozen.

In some embodiments, a first temperature state of the set of temperature states has an associated first range of data values. A second temperature state of the set of temperature states has an associated second range of data values. In some cases, determining whether the identified data is indicative of the temperature state being one of the set of temperature states comprises, in response to determining that a data value derived from the identified data falls within the first range, determining that the food is in the first temperature state. In some cases, determining whether the identified data is indicative of the temperature state being one of the set of temperature states comprises, in response to determining that a data value derived from the identified data falls within the second range, determining that the food is in the second temperature state.

The associated first range of data values may refer to a possible range of data values (e.g. derived from the statistical information described above) associated with the first temperature state. The associated second range of data values may refer to a possible range of data values (e.g. derived from the statistical information described above) associated with the second temperature state. The first and second range of data values may comprise a predetermined threshold. For example, the first range of data values may be below the predetermined threshold while the second range of data values may be above the predetermined threshold.

In some embodiments, the data value is derived based on an average image parameter value calculated from the dataset.

In some embodiments, the average image parameter value comprises a mean image parameter value. The mean image parameter value may correspond to a sum of the image parameter values within the set divided by a total number of image parameter values in the set.

In some embodiments, the average image parameter value comprises a median image parameter value. The median image parameter value may correspond to a middle image parameter value within an ordered set of the image parameter values.

In some embodiments, the average image parameter value comprises a modal image parameter value. The modal image parameter value may correspond to a most common image parameter value within the set. The most common image parameter value may refer to the interval (e.g., image parameter value bin/interval) containing the largest number of pixels from the total number of pixels of the image data that have the image parameter value falling within the interval.

In some embodiments, the data value is derived from a number of the image parameter values that belong to the interval that comprises the average image parameter value.

In some embodiments, the data value is based on a ratio of the number to a total number of image parameter values in the set of image parameter values. The first range and/or the second range may comprise a predetermined threshold. Determining whether the identified data is indicative of the temperature state being one of the set of temperature states may comprise comparing the ratio with the predetermined threshold. If the ratio has a value on one side of the predetermined threshold, the food has one of the temperature states. If the ratio has a value on the other side of the predetermined threshold, the food has the other temperature state. As already mentioned, the predetermined threshold may be calculated experimentally.

In some embodiments, the data value is based on the average image parameter value calculated from the dataset. The first range and/or the second range may comprise a predetermined threshold. Determining whether the identified data is indicative of the temperature state being one of the set of temperature states may comprise comparing the average image parameter value with the predetermined threshold. If the average image parameter value has a value on one side of the predetermined threshold, the food has one of the temperature states. If the average image parameter value has a value on the other side of the predetermined threshold, the food has the other temperature state. If the average image parameter value is the mean hue, such embodiments may be able to determine the temperature state of red meat.

In some embodiments, the dataset is representative of a histogram of the set of image parameter values. The set of intervals may correspond to a set of bins of the histogram.

In some embodiments, the region of the image has an associated set of pixels. The set of image parameter values may be associated with the set of pixels (e.g., each pixel may have registered its own image parameter value). The proportion in each interval may correspond to a number of the pixels (e.g., with image parameter values falling within the interval).

In some embodiments, a parameter associated with the image parameter values is a channel of a color space. For example, hue, saturation and value are each channels of the HSV color space.

In some embodiments, color space comprises at least one channel, and the at least one channel comprises color, saturation and/or brightness. The color space may comprise the HSV color space, or any other appropriate color space.

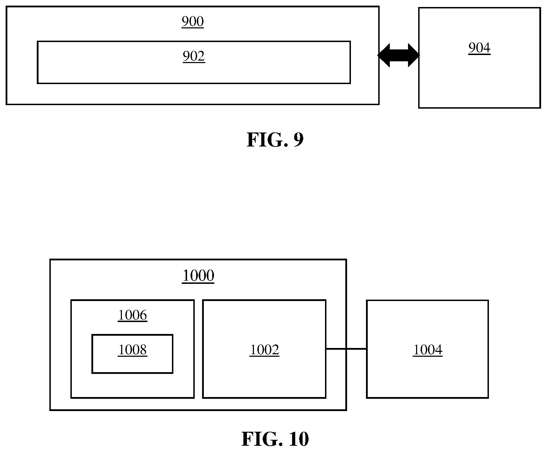

FIG.9 is a schematic drawing of a non-transitory machine-readable medium 900 for implementing various embodiments described herein. As used herein, the term "non-transitory" does not encompass transitory propagating signals. The machine-readable medium 900 stores instructions 902 readable and executable by a processor 904 to implement the method of any of the embodiments described herein (e.g., cooking methods 100, 500 and/or related embodiments). The machine-readable medium 900 and/or the processor 904 may be implemented by any of the controller 206, cloud computing service 210, user equipment 212 and/or controller 312 of Figures 2 or 3.

FIG. 10 is a schematic drawing of apparatus 1000 for implementing various embodiments described herein. The apparatus 1000 may be implemented by any of the controller 206, cloud computing service 210, user equipment 212 and/or controller 312 of Figures 2 or 3.

The apparatus 1000 comprises a processor 1002. The processor 1002 is configured to communicate with an interface 1004. The interface 1004 may be any interface (wireless or wired) implementing a communications protocol to facilitate exchange of data (e.g., image data, cooking apparatus control instructions, etc.) with other devices such as another part of the cooking ecosystem 200.

The apparatus 1000 further comprises a memory 1006 (e.g., non-transitory or otherwise) storing instructions 1008 readable and executable by the processor 1002 to implement various embodiments described herein (e.g., cooking method 100 or any of the associated embodiments).

Any of the models described herein may be implemented by the processing circuitry for implementing the cooking methods described herein. Thus, certain blocks of the cooking methods may involve use of such models in order to provide the stated functionality. The models may be (machine learning) ML-based or non-ML-based. However, certain embodiments described herein refer to use of non-ML-based models, which may avoid the need to use extensive compute resources and/or enable local processing.

While the invention has been illustrated and described in detail in the drawings and foregoing description, such illustration and description are to be considered illustrative or exemplary and not restrictive; the invention is not limited to the disclosed embodiments.

One or more features described in one embodiment may be combined with or replace features described in another embodiment.

Embodiments in the present disclosure can be provided as methods, systems or as a combination of machine-readable instructions and processing circuitry. Such machine-readable instructions may be included on a non-transitory machine (for example, computer) readable storage medium (including but not limited to disc storage, CD-ROM, optical storage, flash storage, etc.) having computer readable program codes therein or thereon.

The present disclosure is described with reference to flow charts and block diagrams of the method, devices, and systems according to embodiments of the present disclosure. Although the flow charts described above show a specific order of execution, the order of execution may differ from that which is depicted. Blocks described in relation to one flow chart may be combined with those of another flow chart. It shall be understood that each block in the flow charts and/or block diagrams, as well as combinations of the blocks in the flow charts and/or block diagrams can be realized by machine readable instructions.

The machine-readable instructions may, for example, be executed by a general-purpose computer, a special purpose computer, an embedded processor, or processors of other programmable data processing devices to realize the functions described in the description and diagrams. In particular, a processor or processing circuitry, or a module thereof, may execute the machine-readable instructions. Thus, functional modules of apparatus and other devices described herein may be implemented by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate array etc. The methods and functional modules may all be performed by a single processor or divided amongst several processors.

Such machine-readable instructions may also be stored in a computer readable storage that can guide the computer or other programmable data processing devices to operate in a specific mode.

Such machine-readable instructions may also be loaded onto a computer or other programmable data processing devices, so that the computer or other programmable data processing devices perform a series of operations to produce computer-implemented processing, thus the instructions executed on the computer or other programmable devices realize functions specified by block(s) in the flow charts and/or in the block diagrams.

Further, the teachings herein may be implemented in the form of a computer program product, the computer program product being stored in a storage medium and comprising a plurality of instructions for making a computer device implement the methods recited in the embodiments of the present disclosure.

Elements or steps described in relation to one embodiment may be combined with or replaced by elements or steps described in relation to another embodiment. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A cooking method (100), comprising:
receiving (102) image data corresponding to a view of food in a pre-cooked state, wherein a region of the image data maps to at least part of the food visible in the view, wherein the region of the image data comprises a set of image parameter values representative of an appearance of the food in its pre-cooked state, and wherein the set of image parameter values has a range of image parameter values;
generating (104) a dataset indicative of a proportion of the set of image parameter values that fall within each interval of a set of intervals comprising the range of image parameter values;
identifying (106) data from the dataset that is indicative of a temperature state of the food in its pre-cooked state;
determining (108) the temperature state of the food in its pre-cooked state by determining whether the identified data is indicative of the temperature state being one of a set of temperature states; and
determining (110) a cooking parameter to use for cooking the food, wherein the cooking parameter is determined in dependence on the temperature state of the food in its pre-cooked state.

2. The cooking method of claim 1, wherein determining the temperature state of the food comprises using a non-machine learning based method to determine the temperature state.

3. The cooking method of any of claims 1 to 2, wherein the set of temperature states comprise frozen and non-frozen.

4. The cooking method of any of claims 1 to 3, wherein a first temperature state of the set of temperature states has an associated first range of data values, wherein a second temperature state of the set of temperature states has an associated second range of data values, and wherein determining whether the identified data is indicative of the temperature state being one of the set of temperature states comprises:
in response to determining that a data value derived from the identified data falls within the first range, determining that the food is in the first temperature state; and
in response to determining that a data value derived from the identified data falls within the second range, determining that the food is in the second temperature state.

5. The cooking method of claim 4, wherein the data value is derived based on an average image parameter value calculated from the dataset.

6. The cooking method of claim 5, wherein the average image parameter value comprises one of:
a mean image parameter value, wherein the mean image parameter value corresponds to a sum of the image parameter values within the set divided by a total number of image parameter values in the set;
a median image parameter value, wherein the median image parameter value corresponds to a middle image parameter value within an ordered set of the image parameter values; or
a modal image parameter value, wherein the modal image parameter value corresponds to a most common image parameter value within the set.

7. The cooking method of any of claims 5 to 6, wherein the data value is derived from a number of the image parameter values that belong to the interval that comprises the average image parameter value.

8. The cooking method of claim 7, wherein:
the data value is based on a ratio of the number to a total number of image parameter values in the set of image parameter values;
the first range and/or the second range comprises a predetermined threshold; and
determining whether the identified data is indicative of the temperature state being one of the set of temperature states comprises comparing the ratio with the predetermined threshold, wherein:
if the ratio has a value on one side of the predetermined threshold, the food has one of the temperature states; and
if the ratio has a value on the other side of the predetermined threshold, the food has the other temperature state.

9. The cooking method of any of claims 5 to 6, wherein:
the data value is based on the average image parameter value calculated from the dataset;
the first range and/or the second range comprises a predetermined threshold; and
determining whether the identified data is indicative of the temperature state being one of the set of temperature states comprises comparing the average image parameter value with the predetermined threshold, wherein:
if the average image parameter value has a value on one side of the predetermined threshold, the food has one of the temperature states; and
if the average image parameter value has a value on the other side of the predetermined threshold, the food has the other temperature state.

10. The cooking method of any of claims 1 to 9, wherein the dataset is representative of a histogram of the set of image parameter values, and wherein the set of intervals correspond to a set of bins of the histogram.

11. The cooking method of any of claims 1 to 10, wherein
the region of the image has an associated set of pixels;
the set of image parameter values are associated with the set of pixels; and
the proportion in each interval corresponds to a number of the pixels.

12. The cooking method of any of claims 1 to 11, wherein a parameter associated with the image parameter values is a channel of a color space.

13. The cooking method of claim 12, wherein the color space comprises at least one channel, and the at least one channel comprises color, saturation and/or brightness.

14. A non-transitory machine readable medium (900) storing instructions (902) readable and executable by a processor (904) to implement the cooking method of any one of claims 1 to 13.

15. A cooking apparatus (300) for implementing a cooking process, comprising:
a cooking chamber (302) for receiving food (304);
a housing (306) defining the cooking chamber;
an air circulation system (308) for circulating air flow inside the cooking chamber;
a camera (310) for capturing images during the cooking process; and
a controller (312) configured to:
receive (102) image data corresponding to a view of food in a pre-cooked state, wherein a region of the image data maps to at least part of the food visible in the view, wherein the region of the image data comprises a set of image parameter values representative of an appearance of the food in its pre-cooked state, and wherein the set of image parameter values has a range of image parameter values;
generate (104) a dataset indicative of a proportion of the set of image parameter values that fall within each interval of a set of intervals comprising the range of image parameter values;
identify (106) data from the dataset that is indicative of a temperature state of the food in its pre-cooked state;
determine (108) the temperature state of the food in its pre-cooked state by determining whether the identified data is indicative of the temperature state being one of a set of temperature states; and
determine (110) a cooking parameter for the cooking apparatus to use for cooking the food, wherein the cooking parameter is determined in dependence on the temperature state of the food in its pre-cooked state.
